# EUROPÄISCHE PATENTSCHRIFT

(11) **EP 0 488 063 B1**
(45) Veröffentlichungstag und Bekanntmachung des Hinweises auf die Patenterteilung: **25.01.1995**
(21) Anmeldenummer: 91119906.5
(22) Anmeldetag: 22.11.1991
(51) Int. Cl.: B01D 71/10

(54) **Cellulosedialysehohlfaden**
Cellulose dialysis hollow fibres
Fibres creuses pour dialyse en cellulose

(30) Priorität: 30.11.1990 DE 4038247
(43) Veröffentlichungstag der Anmeldung: 03.06.1992
(73) Patentinhaber: Akzo Nobel N.V., 6824 BM Arnhem (NL)
(72) Erfinder: von Sengbusch, Günter, Dr., W-5600 Wuppertal 23 (DE)
(74) Vertreter: Fett, Günter

(56) Entgegenhaltungen:
- EP-A- 0 042 517
- EP-A- 0 126 994
- FR-A- 2 337 212
- GB-A- 2 086 798

## Beschreibung

Cellulosemembran in Form eines Hohlfadens, gebildet aus Cellulose-Cuoxamlösungen und Ausbildung des Innenhohlraumes durch eine Flüssigkeit oder ein Gas und mit einer UFR von wenigstens 8,33 . 10⁻¹² ^{m}/Pa·s (4 ml/m² ·h · mm Hg).

Aus der DE-OS 23 28 853 sind Cellulosehohlfäden, bei denen die Cellulose aus Cuoxamlösungen regeneriert wurde, bekannt.

In der Schrift wird über die Struktur der bis dahin üblichen bekannten Cellulose(-Flach)membranen aus Kupferoxid-Ammoniak-Regeneratcellulose angenommen, daß sie fein verteilt Dialyseporen oder -Lücken mit Querabmessungen in der Größenordnung von 1 bis 9 nm (10 bis 90 A (A = Angström)) aufweisen, im Mittel von etwa 3 nm (30 A). Es ist bekannt, daß Cellulose aus kristallinen und amorphen Teilen besteht. Bei Betrachtung der feinen Lückenstruktur einer Cellulosemasse gegenüber dem Konzept der "Poren" eines dünnen Cellulosefilmes wurde angenommen, daß der kristalline Teil bei der Dialyse niedermolekularer Stoffe fast keine Rolle spielt, während der amorphe Teil zur Dialyseleistung tatsächlich beiträgt. Während des Ablaufes der Dialyse schwellen die amorphen Teile der Cellulose dadurch an, daß Wassermoleküle zwischen die Cellulosemoleküle eindringen. Das führt dazu, daß in den Molekularketten vergrößerte Lücken auftreten, durch die die niedermolekularen Stoffe während der Dialyse hindurchtreten können.

Es wurde dort weiterhin angenommen, daß Hohlfasern, die durch Deacetylierung von Cellulosetriacetat gewonnen worden sind, auch aus Cellulose bestehen und daß die "Poren"-Abmessungen und die Verteilungsart der "Poren" den Eigenschaften einer Cellophan-Membran entsprechen.

Zu den gemäß der DE-OS 23 28 853 hergestellten Cellulosehohlfäden wird beschrieben, daß die Lückendurchgänge in der bekannten Hohlfaser Querschnittsabmessungen von höchstens 20 nm (200 A) haben und daß aufgrund dieser Zahlenangabe angenommen wird, daß der mittlere Wert für die Größe der feinen Lücken merklich erhöht worden ist, wodurch die Dialyseleistung im Vergleich mit bisher erreichbaren Werten verbessert wurde.

Diese bekannten Hohlfasern sind unter einem Elektronenmikroskop mit zwanzigtausendfacher Vergrößerung betrachtet worden. Dabei wurden feine Durchgänge in Gestalt einer netzartigen Struktur mit maximal 20 nm (200 A) Durchgangsweite nicht nur im Querschnitt, sondern auch im Längsschnitt der Hohlfaser beobachtet. Diese Durchgangswege sollen über die ganze Struktur der Faser gleichmäßig verteilt sein und ein Fibrillennetzwerk bilden. Hergestellt wurden diese bekannten Hohlfasern dadurch, daß eine Spinnflüssigkeit aus Kupfer-Ammonium-Cellulose durch eine äußere Ringdüse und gleichzeitig damit durch eine innere zentrale Öffnung, die konzentrisch zur äußeren Ringdüsenöffnung liegt, ein Kernflüssigkeitsstrang extrudiert wird, der aus einem organischen flüssigen Lösemittel besteht, das gegenüber der Spinnflüssigkeit nicht koaguliert wird, so daß ein aus Hülle und Kern zusammengesetzter Flüssigkeitsfaden gebildet wird, der durch einen gasförmigen Bereich von beispielsweise 300 mm Länge frei unter der Schwerewirkung zur Streckung des Fadens und Erzielung eines verringerten Gesamtdurchmessers hindurchfällt, worauf der gestreckte Flüssigkeitsfaden in einen Koagulationsbereich eingeführt und mit einer wässerigen NaOH-Lösung in Kontakt gebracht wird.

Beispielsweise soll dazu die Spinnflüssigkeit 10 Gew.% Cellulose, 3,6 Gew.% Kupfer und 7 Gew.% Ammonium enthalten und eine Viskosität von 2000 Poise (entsprechend 200 Pas) aufweisen.

Aus der DE 28 23 985-A1 ist eine Dialysemembran aus regenerierter Cellulose bekannt, die sich auszeichnet durch eine Ultrafiltrationsleistung von 1,45 . 10⁻¹¹ bis 6,25 . 10⁻¹¹ m/Pas.s (7 bis 30 ml/h m² mm Hg) und eine Mittelmoleküldurchlässigkeit von 4 · 10⁻³ bis 12 · 10⁻³ cm/min (entsprechend 0,65 bis 2,0 »m · s⁻¹) und daß sie aus Cuoxamlösungen regneriert ist.

Bei dieser bekannten Dialysemembran bleibt die Ultrafiltrationsrate unter üblichen Lagerbedingungen nicht erhalten, sondern vermindert sich in deutlich meßbarer Weise.

Im Zusammenhang mit der Sterilisation von derartigen Cellulosemembranen mittels einer Feuchtwarmbehandlung bei einer Temperatur von 105 bis 148°C war in der DE-PS 28 11 551 beschrieben worden, daß in Abhängigkeit von dem Typ der Cellulose die Permeabilität gegenüber Wasser merklich verschlechtert wird. Bei einer Autoklavenbehandlung unter Verwendung von Wasserdampf allein nimmt die UFR-Rate der Membran so drastisch ab, daß die Membran wertlos wird. Eine Füllung der Membran mit physiologischer Kochsalzlösung soll diese Abnahme verhindern.

In der genannten Patentschrift wird auch auf eine von der Enka Glanzstoff AG herausgegebene Veröffentlichung Bezug genommen, die sich mit Kupferammoniumcelluloseschläuchen und -hohlfasern befaßt, in der auf die Bedeutung der Handhabung und Lagerung derartiger Membranen bei 23°C und 50% relativer Luftfeuchtigkeit verwiesen wird. In dem Zusammenhang wird vor einem Befeuchten und Wiedertrocknen gewarnt, weil dann die ausgezeichneten Permeabilitätseigenschaften herabgesetzt werden.

Aus dem DE-Patent 29 06 576 ist ein Verfahren zum Spinnen von Hohlfäden aus regenerierter Cellulose für semipermeable Membranen durch Auspressen einer Cellulose-Cuoxam-Lösung durch den Ringschlitz einer Hohlfadenspinndüse in wäßrige Natronlauge und einer hohlraumbildenden Flüssigkeit durch die Innenbohrung der Hohlfadenspinndüse und übliche Nachbehandlung bekannt. Das Verfahren ist dadurch gekennzeichnet, daß die Hohlfadenspinndüse in die wäßrige Natronlauge eingetaucht ist und daß das Verhältnis von Abzugsgeschwindigkeit des Hohlfadens an der ersten Abzugswalze zur Ausstoßgeschwindigkeit der Cellulose-Cuoxam-Lösung aus dem Ringschlitz der Hohlfadenspinndüse 1,00 bis 1,05 beträgt und die Richtung des Fadenlaufs von der Hohlfadenspinndüse zur ersten Abzugswalze einen spitzen Winkel mit der Achse der Hohlfadenspinndüsenöffnung bildet.

Aufgabe dieses bekannten Verfahrens war es, ein Verfahren zum Spinnen von Hohlfäden aus regenerierter Cellulose für semipermeable Membranen zur Verfügung zu stellen, das es gestattet, Hohlfäden mit exakter, durch die Spinndüsenform vorgegebener Querschnittsform zu erzeugen, die sich zugleich auch durch hervorragende Eigenschaften als semipermeable Membranen auszeichnen und bei denen die mechanischen Festigkeiten nicht beeinträchtigt sind. Insbesondere Hohlfadenformen mit exzentrischem Querschnitt lassen sich mit den bekannten Verfahren hervorragend verwirklichen. Einer Anordnung der Hohlfadenspinndüse im Boden der Koagulationswanne wird wegen technischer Probleme beim Abdichten und Anspinnen eine geringere Bedeutung beigemessen.

Bekannt ist aus dem EP-Patent 0 076 442 ein Verfahren zur Herstellung einer Hohlfaser aus regenerierter Kupfer-Ammonium-Zellulose mit einer axial angeordneten zylindrischen Bohrung, die sich über die Faserlänge erstreckt, wobei die Bohrung mit Gas gefüllt ist, mit den Schritten:
1) Extrudieren einer Spinnlösung aus Kupfer-Ammonium-Zellulose durch eine ringförmige Öffnung, wodurch ein Faser-Extrudat mit einer Bohrung gebildet wird, während gleichzeitig in die Bohrung der Faser durch ein im Zentrum der ringförmigen Öffnung angeordneten Einblasrohr Gas in das Faser-Extrudat eingeblasen wird;
2) Fallenlassen der Faser im freien Fall in einem Luftraum und Eintauchenlassen im wesentlichen senkrecht bis zu einer Tiefe von 2 bis 20 mm, vorzugsweise bis zu einer Tiefe von bis zu 30 mm, unterhalb der Oberfläche eines Koagulationsbades nur unter dem Einfluß einer während des freien Falls gewonnenen, abwärts gerichteten Kraft;
3) Hindurchleiten des Faser-Extrudats durch das Koagulationsbad, wodurch eine Hohlfaser mit einer axial angeordneten zylindrischen Bohrung erhalten wird, und
4) Raffinieren und Trocknen der so gewonnenen Hohlfaser bekannt.

Die dazu erforderliche lange Luftstrecke erfordert Spinnlösungen mit einer hohen Viskosität. Außerdem ergeben sich bei der Forderung, den Faden im freien Fall bis zu 20 mm tief in das Koagulationsbad eintauchen zu lassen, erhebliche Schwierigkeiten

Umfangreiche Untersuchungen der bekannten Dialysehohlfäden aus Kupferammoniumcellulose ergaben, daß die Beeinträchtigung der UFR eindeutig von den Lagerungsbedingungen abhängt. So zeigt es sich, daß bei einer Lagerung entsprechender Hohlfäden bei hoher rel. Feuchtigkeit die UFR auf ca. 20% des ursprünglichen Wertes innerhalb von weniger als 10 Tagen vermindert.

Bei Lagerung im gequollenen (nassen) Zustand ist eine Abnahme der UFR nicht festzustellen. Nach dem Wiedertrocknen solcher Membranen fällt die UFR jedoch auf Werte, die mit der Lagerung bei 100% Feuchtigkeit im Einklang stehen. Eine Lagerung in nassem Zustand ist deshalb nicht praktikabel, weil die Lagerzeit begrenzt bleiben muß, um Gefahren, insbesondere mikrobiologischer und chemischer Abbauprozesse, weitgehend auszuschließen.

Aufgabe der vorliegenden Erfindung war es, Cellulosemembranen in Form eines Hohlfadens aus Cellulose-Cuoxamlösungen herzustellen, bei denen die UFR auch bei ungünstigen Lagerbedingungen sich so wenig verändert, daß die notwendigen Permeabilitätseigenschaften von mindestens 8,33 . 10⁻¹² m/Pa.s (4 ml/m²h mmHg) erhalten bleiben.

Gelöst wird diese Aufgabe durch einen Cellulosehohlfaden, der dadurch gekennzeichnet ist, daß die Hydrogelanteile der Cellulose in Zellen mit einer mittleren freien Weglänge, bestimmt mit der Gefrierätz-Replica-Methode nach Quellung der Membran mit Wasser, von 3 - 10 nm in der Membranwandung in logarithmischer Normalverteilung verteilt sind, wobei die mittlere freie Weglänge der Abstand zwischen den Zellen ist, und der Formfaktor von mehr als 65% der Summe aller Schnittflächen der Hydrogelzellen zwischen 1,0 und 5,0 beträgt und die UFR nach einer Lagerung über 10 Tage in feuchter Atmosphäre bei 20°C und 100% rF um mehr als 50% des Wertes der unmittelbar nach der Trocknung oder nach Lagerung in trockener Umgebung erhalten wird, beträgt.

Die bisher bekannt gewordenen Messungen über die "Porenstruktur" von Dialysemembranen aus Cellulose waren widersprüchlich und ungenau. Dieses liegt darin begründet, daß für REM-Aufnahmen die Auflösung nicht ausreicht und die Probenpräparation für TEM-Aufnahmen unter Bedingungen erfolgen müssen, die eine Veränderung der Probe mit sich bringen. Insbesondere läßt sich der für die Transporteigenschaften einer Cellulosemembran verantwortliche Hydrogelanteil nicht unverändert messen. Zwar sind in neuerer Zeit auch Einbettungsverfahren von gequollenen Cellulosemembranen mit wasserhaltigen Polymeren möglich geworden. Die Auflösung von TEM-Aufnahmen solcher Einbettungen ist nicht gut genug, um exakte Aussagen über die Hydrogel-(="Poren")-Struktur der Cellulosemembranen machen zu können.

Durch Anfertigen von Replicas, d.h. von Abdrücken wurden bereits vor der Einführung von Rasterelektronenmikroskopen Oberflächensrukturen sichtbar gemacht. Ein wesentlicher Fortschritt moderner Verfahren stellt die Kombination mit Gefrierätzverfahren dar, mit denen auch wässrige Proben untersucht werden können. Das Auflösungsvermögen konnte durch Verwendung von Hochvakuumanlagen und Elektronenstrahl-Verdampferquellen deutlich verbessert werden.

Sehr wesentlich ist weiter ein artefakt-freier Einfrierprozeß, der sehr hohe Einfrierraten (typisch ≧ 15.000 K/s) voraussetzt, bei denen keine Eiskristallbildung auftritt sondern amorphes, "vitrifiziertes" Eis gegeben ist.

Die typischen Schritte dieser Technik sind
1. ultraschnelles Einfrieren der wässrigen Probe, z.B. mit flüssigem Propan oder schmelzendem Stickstoff (MN₂-slush).
2. Übertragen der Probe in die Hochvakuum-Anlage.
3. Brechen unter Vakuum und ständiger Kühlung auf Temperaturen ≦ - 100°C.
4. Entfernen von gefrorenem Wasser im Vakuum durch H₂O-Sublimation (=Ätzen).
5. Schrägbedampfung mit Pt/C zur Reliefdarstellung.
6. Bedampfung mit einer C-Trägerstützschicht.
7. Auftauen der Probe und Auflösen der ursprünglichen Probe in H₂SO₄.
8. Reinigen der verbleibenden Replica (mehrfach in H₂O).
9. Übertragen auf TEM-Präparat-Netze.

Die TEM-Aufnahmen ermöglichen die Wiedergabe der Struktur im Innern einer Membranwand in H₂O gequollenem Zustand. Mit hohem Auflösungsvermögen ist das Cellulosenetzwerk im Gelzustand dargestellt. Die hellen Bereiche können als die durchlässigen Bereiche ("Poren") der Membran angesehen werden.

Mit der Gefrierätz-Replica-Methode lassen sich eindeutige Aussagen über die Hydrogele, deren Verteilung, Größe und Form machen. Die Methode ist beispielsweise für Carboxymethylcellulosegele in Coll. Polym. Sci 267, S. 230 - 236 (1989) beschrieben. Danach wird die mit Wasser gequollene Dialysemembran zunächst in sehr kurzer Zeit gefroren. Um später brauchbare Messungen vornehmen zu können, sind erhebliche Gefriergeschwindigkeiten erforderlich, mindestens 15 000 K/s, um die Bildung von Eiskristallen und die Schädigung der Probe durch Spaltungs-Artefakte zu vermeiden. Derartige Gefriergeschwindigkeiten sind beispielsweise mit flüssigem Propan mit der Düsen-Gefriermethode möglich.

Das gefrorene Wasser wird durch Sublimation ins Hochvakuum entfernt (geätzt) und die Probe schräg mit Platin und Kohlenstoff bedampft. Die Probe wird anschließend zur Stabilisierung mit weiterem Kohlenstoff bedampft. Nach dem Entfernen der Cellulose blieb der Abdruck übrig, der unter dem TEM fotografiert wurde.

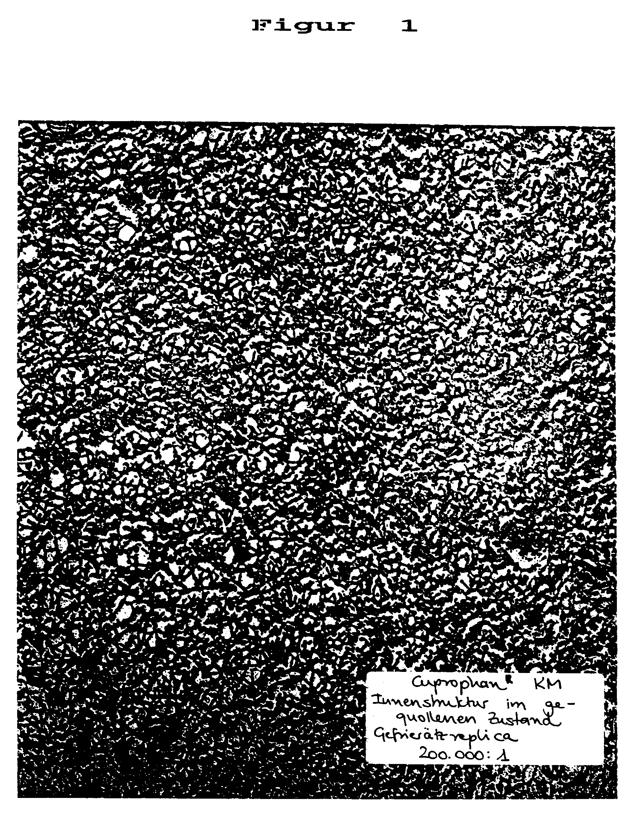

Das erhaltene Foto wird bei einer Endvergrößerung von 1 : 200 000 in einem automatischen Bildauswertegerät, beispielsweise "Quantimet 970" auf Größe, Verteilung und Form des Hydrogelabdruckes untersucht. (Fig. 1) Die mittlere freie Weglänge wurde bei dieser Messung zu 5,2 nm ermittelt, wobei 69% aller Schnittflächen einen Formfaktor zwischen 1,0 und 5,0 aufwiesen.

Obwohl, wie gezeigt wird, auch zur Ausbildung des Innenhohlraumes übliche Flüssigkeiten geeignet sind, wird die Alterungsbeständigkeit besonders gut dann erreicht, wenn die Ausbildung des Innenhohlraums durch Wasser oder eine wässrige Lösung erfolgt ist.

Besonders vorteilhaft ist es auch, Gase für die Ausbildung des Innenraumes einzusetzen. Für eine hohe Alterungsbeständigkeit ist es von Vorteil, wenn die Ausbildung des Innenhohlraumes mit einem Gas mit wenigstens 80% relativer Feuchte bei Raumtemperatur erfolgt ist.

Gegenstand der Erfindung ist auch ein Verfahren zur Herstellung der erfindungsgemäßen Cellulosehohlfäden durch Verspinnen einer Cellulosecuoxamlösung bei einer Temperatur von 20°C, die 5 - 9 Gew.-% Cellulose, 2,3 - 2,8 Gew.-% Cu und 7,5 - 9 Gew.-% Ammoniak und gegebenenfalls Zusatzstoffe enthält, durch eine Hohlfadenringschlitzdüse durch ein Fällbad unter Verwendung einer Flüssigkeit oder eines Gases zur Ausbildung des Innenhohlraums, wobei das Fällbad 10 - 15 Gew.-% eines Alkalihydroxids enthält, durch Waschen in sauren Bädern und Wässern, Behandlung mit Weichmachern, sowie Trocknen bei 105°C und Aufwickeln des Hohlfadens, dadurch gekennzeichnet, daß die Viskosität der Spinnlösung 20 - 35 Pas beträgt und daß die Hohlfadenringschlitzdüse innerhalb des Fällbades bis höchstens 2,5 cm oberhalb der Fällbadoberfläche angeordnet wird.

Insbesondere dann, wenn die Ausbildung des Innenhohlraumes durch Wasser oder Gase mit wenigstens 80% relativer Feuchtigkeit bei Raumtemperatur erfolgt, hat es sich als zweckmäßig erwiesen, daß die Hohlfadenspinndüse im Boden der das Fällbad aufnehmenden Koagulationswanne angeordnet und der Hohlfaden nach oben gesponnen wird.

Der Spinnlösung können auch zur besonderen Ausbildung und Stabilisierung der Hydrogelzellen Zusätze, gegebenenfalls im Gemisch untereinander, beigegeben werden. Der Zusatz folgender Verbindungen hat sich als geeignet erwiesen:

Ein- oder mehrwertige Alkohole mit 1- 10 C-Atomen, cycloaliphatische Alkohole, Polyvinylalkohol, Polyvinylpyrrolidon, Hydroxiethylcellulose, Milchproteine, Dimethylformamid, sowie Polyethylenglykol mit einer mittleren Molmasse Mw 100 - 3000 und/oder Silikagele.

Die Erfindung wird anhand der nachfolgenden Beispiele näher erläutert:

### Beispiel 1

Nach dem Cuoxamverfahren wurde eine Cellulose-Spinnlösung hergestellt, die einen Cellulosegehalt von 6,50 Gew.-%, einen NH₃-Gehalt von 8,00 Gew.% und einen Cu-Gehalt von 2,80 Gew.% hatte. Diese Lösung wurde filtriert, entlüftet und anschließend durch den Ringspalt einer Hohlfadenspinndüse in ein Koagulationsbad mit einer NaOH-Konzentration von 115 g/l bei einer Abzugsgeschwindigkeit von 56 m/min versponnen. Die Viskosität der Spinnlösung betrug 25 Pas. Die Hohlfadenspinndüse war 1,2 cm oberhalb der Fällbadoberfläche angeordnet. Der zentralen Düsenbohrung wurde während des Spinnprozesses kontinuierlich zur Stabilisierung des Lumens Isopropylmyristat zugeführt. Es entstand eine Kapillarmembran, die nach Bildung der Regeneratcellulose einer Waschbehandlung unterzogen und anschließend in einem Weichmacherbad mit 135 g/l Glycerin und 350 g/l Isopropanol behandelt wurde. Die Trocknung der Kapillarmembran erfolgte mit Luft von 90°C. Folgende Membraneigenschaften wurden erhalten:

| | |
|---|---|
| Außendurchmesser | 232 »m |
| Innendurchmesser | 200 »m |
| Reißfestigkeit | 103 · 10³ cN/mm² |
| Bruchdehnung | 28 % |
| Ultrafiltrationsrate (UFR) | 6,0 .10⁻¹¹ m/Pa.s (29,0 ml/m² · h · mm Hg) |

Dieses Material wurde einem Klimatest unter folgenden Bedingungen unterworfen.

| | |
|---|---|
| Dauer: | 13 Tage |
| rel. Feuchte: | 99% (in Stickstoff) |
| Temperatur: | 20°C |

Nach dem Test wurde eine UFR von 3,98 . 10⁻¹¹ m/Pa.s (19,1 ml/m² · h · mm Hg) gemessen, das sind 65,8% des Ausgangswertes von 6,04 . 10⁻¹¹ m/Pa.s (29 ml/m² · h · mm Hg).

### Beispiel 2

Eine Cellulose-Cuoxam-Lösung mit einer Cellulosekonzentration von 9,3 Gew.%, einem NH3-Gehalt von 8,5 Gew.% und 3,9 Gew.% Cu wurde hergestellt und entlüftet. Parallel dazu wurde aus Polyethylenglycol 400, wässrigem Ammoniak mit einem NH₃-Gehalt von 280 g/l und Wasser eine Lösung mit einem PEG-Gehalt von 35,1 Gew.% und einem NH₃-Gehalt von 9,47 Gew.% hergestellt. Mittels Dosierpumpen wurden die Celluloselösung und die PEG-Lösung einem dynamischen Mischer zugeführt und homogenisiert. Die so resultierende Spinnlösung enthielt 6,5 Gew.% Cellulose, 8,0 Gew.% NH₃ und 2,8 Gew.% Cu und wurde dann wie im Beispiel 1 beschrieben, versponnen. Der Abstand zur Fällbadoberfläche betrug hier jedoch 2,4 cm. Die Viskosität der Spinnlösung betrug hier 22 Pas. Das Weichmacherbad enthielt jedoch in Abänderung der im Beispiel 1 beschriebenen Konzentrationen 25 g/l Glycerin bei einem IPA-Gehalt von 400 g/l. Es wurden folgende Membrandaten erhalten:

| | |
|---|---|
| Außendurchmesser | 240 »m |
| Innendurchmesser | 200 »m |
| Reißfestigkeit | 80 · 10³ cN/mm² |
| Bruchdehnung | 28,5 % |
| Ultrafiltrationsrate vor dem Klimatest | (UFR) 2,56 . 10⁻¹¹ m/Pa.s (12,3 ml/m² · h · mm Hg) |
| Ultrafiltrationsrate nach dem Klimatest | (UFR) 1,54 . 10⁻¹¹ m/Pa.s (7,4 ml/m² · h · mm Hg) |

Verzeichnis der im Text verwendeten Abkürzungen
- UFR: Ultrafiltrationsrate
- rF: relative Feuchte
- REM: Raster Elektonen Mikroskopie
- TEM: Transmission Elektonen Mikroskopie

## Patentansprüche

1. Cellulosedialysemembran in Form eines Hohlfadens, gebildet aus Cellulose-Cuoxamlösungen und Ausbildung des Innenhohlraumes durch eine Flüssigkeit oder ein Gas und mit einer UFR von wenigstens 8,33 .10⁻¹² m/Pa.s (4 ml/m² ·h · mm Hg), dadurch gekennzeichnet, daß die Hydrogelanteile der Cellulose in Zellen mit einer mittleren freien Weglänge, bestimmt mit der Gefrierätz-Replica-Methode nach Quellung der Membran mit Wasser, von 3 - 10 nm in der Membranwandung in logarithmischer Normalverteilung verteilt sind, wobei die mittlere freie Weglänge der Abstand zwischen den Zellen ist, und der Formfaktor von mehr als 65% der Summe aller Schnittflächen der Hydrogelzellen zwischen 1,0 und 5,0 beträgt und die UFR nach einer Lagerung über 10 Tage in feuchter Atmosphäre bei 20°C und 100% relativer Feuchte (rF) um mehr als 50% des Wertes der unmittelbar nach der Trocknung oder nach Lagerung in trockener Umgebung erhalten wird, beträgt.

2. Verfahren zur Herstellung von Cellulosehohlfäden nach den Ansprüchen 1 bis 3
durch Verspinnen einer Cellulosecuoxamlösung bei einer Temperatur von 20°C, die 5 - 9 Gew.% Cellulose, 2,3 bis 2,8 Gew.% Cu und 7,5 - 9 Gew.% Ammoniak,
gegebenenfalls Zusatzstoffe enthält,
durch eine Hohlfadenringschlitzdüse durch ein Fällbad unter Verwendung einer Flüssigkeit oder eines Gases zur Ausbildung des Innenhohlraums, wobei das Fällbad 10 - 15 Gew.% eines Alkalihydroxids enthält,
durch Waschen in sauren Bädern und Wässern, Behandlung mit Weichmachern, sowie Trocknen bei 105°C und Aufwickeln des Hohlfadens,
unter Verwendung einer Spinnlösung mit einer Viskosität von 20 - 35 Pa.s und
Anordnung der Hohlfadenringschlitzdüse entweder innerhalb des Fällbades oder oberhalb des Fällbades mit einem Abstand von höchstens 2,5 cm von der Fällbadoberfläche.

3. Verfahren zur Herstellung von Cellulosehohlfäden nach Anspruch 2, dadurch gekennzeichnet, daß die Ausbildung des Innenhohlraums durch Wasser oder eine wässrige Lösung erfolgt.

4. Verfahren nach Anspruch 2, dadurch gekennzeichnet, daß die Ausbildung des Innenhohlraumes mit einem Gas mit wenigstens 80% relativer Feuchte bei Raumtemperatur erfolgt.

5. Verfahren nach Anspruch 2, dadurch gekennzeichnet, daß die Hohlfadenspinndüse im Boden der das Fällbad aufnehmenden Koagulationswanne angeordnet und der Hohlfaden nach oben gesponnen wird.

## Claims

1. Cellulose dialysis membrane in the form of a hollow filament, made from cellulose-cuoxam solutions and formation of the internal hollow space by means of a liquid or a gas, and with an UFR (ultrafiltration rate) of at least 8.33 . 10⁻¹² m/Pa.s (4 ml/m² · h · mm of Hg), characterised in that the hydrogel constituents of the cellulose are distributed in a logarithmic normal distribution in the membrane walls in cells having a mean free path, determined by the freeze-etch replica method after swelling of the membrane with water, of from 3 - 10 nm, with the mean free path being the distance between the cells, and the form factor of more than 65% of the sum of all sections of the hydrogel cells amounts to between 1.0 and 5.0, and the UFR after storage for more than 10 days in a humid atmosphere at 20°C and 100% relative humidity (rh) amounts to more than 50% of the value which is obtained immediately after drying or after storage in dry surroundings.

2. Method for preparing cellulose hollow filaments according to claims 1 to 3
by spinning a cellulose cuoxam solution at a temperature of 20°C, which solution contains from 5 - 9% by weight of cellulose, from 2.3 to 2.8% by weight of Cu and from 7.5 - 9% by weight of ammonia and optionally additives,
through a nozzle with annular holes for hollow filaments through a spinning bath, using a liquid or a gas for forming the internal hollow space, with the spinning bath containing from 10 - 15% by weight of an alkali hydroxide,
by washing in acid baths and rinsing in water, treatment with softeners, drying at 105°C and winding of the hollow filament,
using a spinning solution having a viscosity of from 20 - 35 Pa.S and
arrangement of the nozzle with annular holes for hollow filaments either inside the spinning bath or above the spinning bath at a distance of at most 2.5 cm from the surface of the spinning bath.

3. Method for preparing cellulose hollow filaments according to claim 2, characterised in that the formation of the internal hollow space is effected using water or an aqueous solution.

4. Method according to claim 2, characterised in that the formation of the internal hollow space is effected using a gas having at least 80% relative humidity at room temperature.

5. Method according to claim 2, characterised in that the spinneret for producing the hollow filaments is arranged in the base of the coagulating bath containing the spinning bath and the hollow filaments are spun upwards.

## Revendications

1. Membrane de dialyse en cellulose, sous la forme d'une fibre creuse, obtenue à partir de solutions cupro-ammoniacales de cellulose et par formation de l'espace creux interne au moyen d'un liquide ou d'un gaz, et présentant un débit en ultrafiltration UFR d'au moins 8,33.10⁻¹²m/Pa.s (4 ml/m².h.mm Hg), caractérisée en ce que les constituants hydrogel de la cellulose en cellules sont répartis dans la paroi de la membrane suivant une distribution normale logarithmique, avec un libre parcours moyen, déterminé par la méthode de gravure par congélation-reproduction, après gonflement de la membrane avec de l'eau, de 3-10nm, le libre parcours moyen étant la distance entre les cellules, et le facteur de forme de plus de 65 % de la somme de toutes les surfaces de coupe des cellules d'hydrogel atteint une valeur comprise entre 1,0 et 5,0, et le UFR après un séjour de 10 jours dans une atmosphère humide, ayant une température de 20°C et une humidité relative (Hr) de 100 %, atteint plus de 50 % de la valeur que l'on obtient aussitôt après le séchage ou après séjour dans une atmosphère sèche.

2. Procédé de préparation de fibres creuses de cellulose selon la revendication 1, par filage d'une solution cupro-ammoniacale de cellulose contenant 5 à 9 % en poids de cellulose, 2,3 à 2,8 % en poids de cuivre, 7,5 à 9 % en poids d'ammoniac et éventuellement des additifs, à une température de 20°C, par une filière à fente annulaire pour fibres creuses, dans un bain coagulant contenant 10 à 15 % en poids d'un hydroxyde de métal alcalin, un liquide ou un gaz étant utilisé pour la formation de l'espace creux interne, et par lavage dans des bains acides et trempage, traitement avec des plastifiants, séchage à 105°C et bobinage de la fibre creuse, procédé dans lequel on utilise une solution de filage ayant une viscosité de 20 à 35 Pa.s et on dispose la filière à fente annulaire pour fibres creuses soit à l'intérieur du bain coagulant, soit au-dessus du bain coagulant, à une distance de la surface du bain coagulant de 2,5 cm au plus.

3. Procédé de préparation de fibres creuses de cellulose selon la revendication 2, caractérisé en ce que la formation de l'espace creux interne est réalisée au moyen d'eau ou d'une solution aqueuse.

4. Procédé selon la revendication 2, caractérisé en ce que la formation de l'espace creux interne est réalisée au moyen d'un gaz ayant une humidité relative d'au moins 80 %, à la température ambiante.

5. Procédé selon la revendication 2, caractérisé en ce que la filière pour fibres creuses est disposée au fond de la cuve de coagulation contenant le bain coagulant et la fibre creuse est filée vers le haut.
